Europäisches Patentamt

European Patent Office

Office européen des brevets

(19)

(11) Veröffentlichungsnummer: **0 187 996**
B1

(12) **EUROPÄISCHE PATENTSCHRIFT**

(45) Veröffentlichungstag der Patentschrift:
28.06.89

(51) Int. Cl.⁴: **A 22 C 11/08**

(21) Anmeldenummer: 85116446.7

(22) Anmeldetag: 21.12.85

(54) Vorrichtung zum portionsweisen Ausbringen pastenartiger Massen, insbesondere Wurstbrät.

(30) Priorität: 11.01.85 DE 3500697

(43) Veröffentlichungstag der Anmeldung:
23.07.86 Patentblatt 86/30

(45) Bekanntmachung des Hinweises auf die Patenterteilung: 28.06.89 Patentblatt 89/26

(84) Benannte Vertragsstaaten:
CH DE FR GB IT LI LU NL SE

(56) Entgegenhaltungen:
DE--A-- 2 330 922
DE--A-- 2 937 829
FR--A-- 2 205 119
FR--A-- 2 455 436
US--A-- 3 742 556
US--A-- 4 015 784

(73) Patentinhaber: NORDISCHER MASCHINENBAU RUD. BAADER GMBH + CO KG
Geniner Strasse 249
D-2400 Lübeck (DE)

(72) Erfinder: Hegelmann, Heinz-Dieter
Hellkamp 10
D-2400 Lübeck (DE)
Erfinder: Kunig, Helmut
Windberg 21
D-2407 Schwartau (DE)
Erfinder: Mette, Manfred, Dr.
Ringstrasse 19b
D-2000 Hamburg 73 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine Vorrichtung zum Abfüllen pastenartiger Massen in Portionen vorbestimmten Gewichts und/oder Volumens, insbesondere Wurstbrät, umfassend ein Maschinengestell mit einem Förderer mit einer Einlaßöffnung und einer Auslaßöffnung, wobei diese gegenüber der ersteren höherliegend angeordnet ist, und wobei der Förderer aus einem Gehäuse besteht, welches mit einem Deckelflansch verschließbar ist, und in dem ein Rotor als Förderelement angetrieben umläuft, sowie einen klapp- oder schwenkbaren Vorratstrichter für die Aufnahme eines Massevorrats mit einem mit der Einlaßöffnung des Förderers in Verbindung stehenden Auslaß an seinem Grunde und einer angetriebenen Stopfeinrichtung in seinem Innenraum.

Eine ähnliche Vorrichtung ist aus dem praktizierten Stand der Technik bekannt. Bei dieser Vorrichtung findet ein Doppelschneckenförderer Verwendung, welcher mit seinem Einlaßende unterhalb des Vorratstrichters und zu seinem Auslaßende hin ansteigend angeordnet ist. Insbesondere zum Zwecke der Reinigung der Maschine sind die Förderschnecken zum Auslaß hin entnehmbar, und das Oberteil des Vorratstrichters klappbar gestaltet.

Es ist die Aufgabe der Erfindung, eine Vorrichtung zum Portionieren pastenartiger Massen vorzuschlagen, welche hinsichtlich ergonomischer Gesichtspunkte, sowie bezüglich der Handhabung zwecks Reinigung und Wartung verbessert ist.

Diese Aufgabe wird erfindungemäß dadurch gelöst, daß der Förderer neben dem Vorratstrichter angeordnet ist, wobei der Deckelflansch an einer Flanke des Vorratstrichters befestigt ist, der Auslaß desselben den Deckelflansch durchsetzt, so daß der Auslaß mit der Einlaßöffnung des Förderers zur Deckung kommt, und die Umlaufachse des Rotors zu der Flanke des Vorratstrichters im wesentlichen senkrecht und in der Ebene der Mittelachse desselben verlaufend angeordnet ist.

Die damit erzielbaren Vorteile bestehen insbesondere in den folgenden Merkmalen:

niedrige Beschickhöhe bei üblicher Auslaßhöhe,

leichte Demontierbarkeit und Zugänglichkeit sämtlicher mit dem Füllgut in Berührung stehender Teile, woraus optimale Reinigungsmöglichkeit folgt.

Nach einer bevorzugten Ausführungsform ist vorgesehen, daß die Auslaßöffnung des Förderers in der Rotationsebene des Rotors liegt. Diese Ausführung trägt durch damit erzielbare kurze und geringen Fließwiderstand aufweisende Führung des Fördergutes zu dessen Schonung bei und beugt der Gefahr der Entmischung vor.

Als wartungstechnisch zweckmäßig zeigt sich, wenn der Vorratstrichter um eine zu seiner Mittelachse im wesentlichen parallel verlaufende Schwenkachse schwenkbar gelagert ist, oder wenn der Vorratstrichter um eine zu seiner Mittelachse im wesentlichen senkrecht verlaufende Schwenkachse schwenkbar gelagert ist. Dabei ist von besonderem Vorteil, wenn die Schwenkachse an der der Auslaßöffnung des Förderers zuweisenden Seite des Vorratstrichters angeordnet ist, da damit die Maschine auch betrieben werden kann, wenn ihre Rück- und hintere Stirnseite unzugänglich ist, ohne daß dadurch Bedienung und Wartung beeinträchtigt werden.

Ein Ausführungsbeispiel der Erfindung wird nachfolgend anhand der Zeichnung näher erläutert.

Es zeigt

Fig. 1 eine Gesamtansicht einer Vorrichtung in zentralaxonometrischer Darstellung,

Fig. 2 mittels eines Einblickes in das Gestell der Vorrichtung eine Anordnung der Einzelaggregate.

Fig. 3 einen Grundriß für die betriebsmäßige Anordnung der Maschine.

Das pultähnlich ausgeführte, eine Stirnseite 4 und eine Frontseite 4a aufweisende Maschinengestell 1 ist mit einer im wesentlichen ebenen Tischfläche 2 ausgestattet, an deren Hinterkante sich eine schräg aufragende Pultfläche 3 anschließt. Aus der Stirnseite 4 des Maschinengestells 1 ragt hinter der Pultfläche 3 das Füllrohr 5 hervor, in dessen Bereich sich auch die Anschlußmöglichkeiten für übliche, nicht gezeigte Vorsatzgeräte befinden. Ebenfalls an der Stirnseite 4 ist ein durch Knie oder Oberschenkel von der Bedienungsperson betätigbarer Schalthebel 6 für die Steuerung der Vorrichtung angebracht. Die Tischfläche 2 dient der Aufnahme eines Vorratstrichters 7, welcher auf einer Winkelkonsole 8 befestigt ist, deren auf der Tischfläche 2 aufliegender Teil als Tragplatte 9 und der Pultfläche 3 zugeordneter Teil als Deckflansch 10 ausgebildet ist. Dabei ist die Anordnung und Gestaltung des Vorratstrichters 7 so getroffen, daß sich die hintere Flanke 11 desselben gegenüber dem Deckflansch 10 abstützt und mit diesem flächig verbunden ist. Der Vorratstrichter 7 weist an seinem Grunde einen den Deckflansch 10 durchsetzenden Auslaß 13 auf.

Der Vorratstrichter 7 ist mit der Winkelkonsole 8 um eine zu der Tischfläche 2 senkrechte Schwenkachse 14 schwenkbar gelagert. Wahlweise kann auch eine in dem Bereich des Deckflansches 10 befindliche und zu der Mittelachse des Vorratstrichters 7 senkrecht verlaufende Schwenkachse 15 vorgesehen sein. In Arbeitsstellung ist die Winkelkonsole 8 mittels geeigneter Schnellverbindungen 16 gegen die Pultfläche 3 gepreßt gehalten. Dabei bewirkt der Deckflansch 10 die Abdichtung eines mit nicht gezeigten radialen Förderkammern versehenen, mit seiner Auslaßöffnung 18 an das Füllrohr 5 anschließenden Förderers 17, welcher in die Pultfläche 3 eingelassen ist, wobei der Auslaß 13 am Grunde des Vorratstrichters 7 mit der Einlaßöffnung 19 des Förderers 17 zur Deckung kommt. In dem Vorratstrichter 7 befindet sich eine Stopfeinrichtung 20, welche durch ein in die Tischfläche 2 eingelassenes Getriebe 21 antreibbar ist.

Zur Reinigung der Vorrichtung wird zunächst die Stopfeinrichtung 20 aus dem Vorratstrichter 7 entnommen, welcher Vorgang durch Verwendung einer geeigneten Schnellkupplung erleichtert werden kann. Sodann werden die Schnellverbindungen 16 zwischen Deckflansch 10 und Pultfläche 3 des Maschinengestells 1 gelöst und der Vorratstrichter 7 mit der Winkelkonsole 8 ausgeschwenkt. Dabei kann eine elektrische Verriegelung im Bereich der Schwenkachse 14 bzw. 15 sicherstellen, daß das Einschalten der Vorrichtung bei ausgeschwenktem Vorratstrichter 7 nicht möglich ist. In dieser Stellung ist der Förderer in handlicher Arbeitshöhe frei zugänglich, wie auch der Vorratstrichter 7 selbst mit sämtlichen Anschlußflächen und -öffnungen, so daß eine Reinigung bzw. Wartung auf unkomplizierte Weise korrekt durchgeführt werden kann.

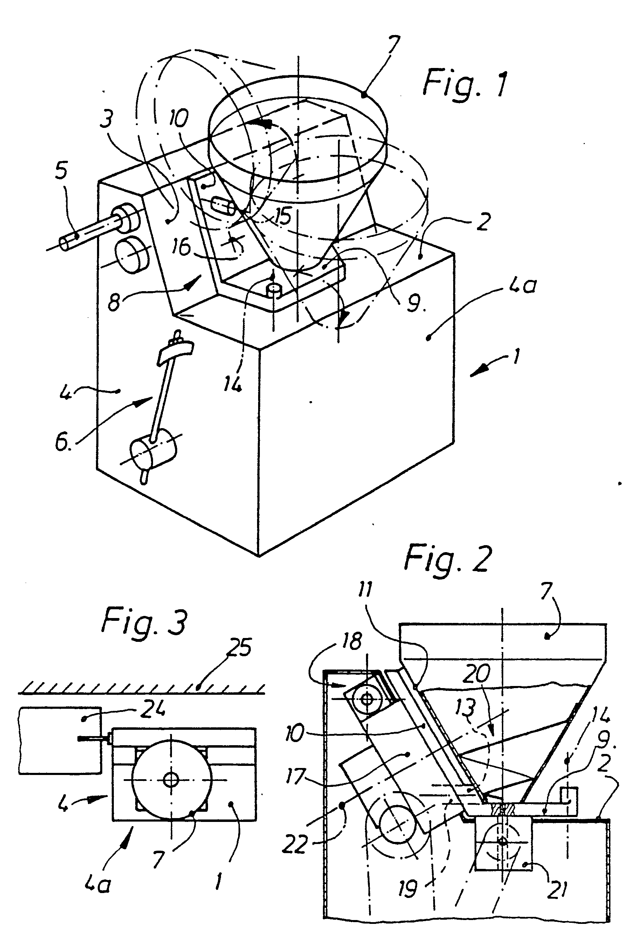

Diese Arbeiten sind ungehindert auch dann ausführbar, wenn die Vorrichtung gemäß Fig. 3 mit ihrer Rückseite gegenüber einer Wand 25 zur Aufstellung gelangt und ein Arbeitstisch 24 unterhalb des Füllrohres 5 Verwendung findet.

Benutzte Bezeichnungen

1 Maschinengestell
2 Tischfläche
3 Pultfläche
4 Stirnseite
4a Frontseite
5 Füllrohr
6 Schalthebel
7 Vorratstrichter
8 Winkelkonsole
9 Tragplatte
10 Deckflansch
11 Flanke
12
13
14 Schwenkachse
15 Schwenkachse
16 Schnellverbindung
17 Förderer
18 Auslaßöffnung
19 Einlaßöffnung
20 Stopfeinrichtung
21 Getriebe
22 Förderschnecke
23 Umlaufachse
24 Arbeitstisch
25 Wand

## Patentansprüche

1. Vorrichtung zum Abfüllen pastenartiger Massen in Portionen vorbestimmten Gewichts und/oder Volumens, insbesondere Wurstbrät, umfassend
ein Maschinengestell mit einem Förderer (17) mit einer Einlaßöffnung (19) und einer Auslaßöffnung (18), wobei diese gegenüber der ersteren höherliegend angeordnet ist, und wobei
der Förderer (17) aus einem Gehäuse besteht, welches mit einem Deckelflansch (10) verschließbar ist, und in dem ein Rotor als Förderelement angetrieben umläuft,
sowie einen klapp- oder schwenkbaren Vorratstrichter (7) für die Aufnahme eines Massevorrats mit einem mit der Einlaßöffnung (19) des Förderers (17) in Verbindung stehenden Auslaß (13) an seinem Grunde und einer angetriebenen Stopfeinrichtung (20) in seinem Innenraum,
dadurch gekennzeichnet, daß der Förderer (17) neben dem Vorratstrichter (7) angeordnet ist, wobei
der Deckelflansch (10) an einer Flanke (11) des Vorratstrichters (7) befestigt ist,
der Auslaß (13) desselben den Deckelflansch (10) durchsetzt, so daß der Auslaß (13) mit der Einlaßöffnung (19) des Förderers (17) zur Deckung kommt, und
die Umlaufachse (22) des Rotors zu der Flanke (11) des Vorratstrichters (7) im wesentlichen senkrecht und in der Ebene der Mittelachse desselben verlaufend angeordnet ist.

2. Vorrichtung nach Anspruch 1, dadurch gekennzeichnet, daß die Auslaßöffnung (18) des Förderers (17) in der Rotationsebene des Rotors liegt.

3. Vorrichtung nach den Ansprüchen 1 und 2, dadurch gekennzeichnet, daß der Vorratstrichter (7) um eine zu seiner Mittelachse im wesentlichen parallel verlaufende Schwenkachse (14) schwenkbar gelagert ist.

4. Vorrichtung nach den Ansprüchen 1 und 2, dadurch gekennzeichnet, daß der Vorratstrichter (7) um eine zu seiner Mittelachse im wesentlichen senkrecht verlaufende Schwenkachse (15) schwenkbar gelagert ist.

5. Vorrichtung nach den Ansprüchen 3 und 4, dadurch gekennzeichnet, daß die Schwenkachse (14 bzw. 15) an der der Auslaßöffnung (18) des Förderers (17) zuweisenden Seite des Vorratstrichters (7) angeordnet ist.

## Claims

1. Device for the dispensing of pasty masses in portions of predetermined weight and/or volume, in particular sausage meat, comprising
a machine frame with a conveyor (17) with an inlet opening (19) and an outlet opening (18), wherein this is arranged to be higher compared with the former, and wherein
the conveyor (17) consists of a housing, which is closable by a cover flange (10) and in which a rotor driven as conveying element rotates,
as well as a tiltable or pivotable supply funnel (7) for the reception of a mass supply with an outlet (13), which stands in connection with the inlet opening (19) of the conveyor (17), at its base and a driven stuffing equipment (20) in its interior, characterised thereby, that the conveyor (17) is arranged beside the supply funnel (17), wherein

the cover flange (10) is fastened at a flank (11) of the supply funnel (7),

the outlet (13) of the same penetrates the cover flange (10) so that the outlet (13) comes into congruency with the inlet opening (19) of the conveyor (17) and

the rotational axis (22) of the rotor is arranged to be substantially perpendicular to the flank (11) of the supply funnel (7) and extend in the plane of the central axis of the same.

2. Device according to claim 1, characterised thereby, that the outlet opening (18) of the conveyor (17) lies in the plane of rotation of the rotor.

3. Device according to the claims 1 and 2, characterised thereby, that the supply funnel (7) is borne to be pivotable about a pivot axis (14) extending substantially parallelly to its central axis.

4. Device according to the claims 1 and 2, characterised thereby, that the supply funnel (7) is borne to be pivotable about a pivot axis (15) extending substantially perpendicularly to its central axis.

5. Device according to the claims 3 and 4, characterised thereby, that the pivot axis (14 or 15) is arranged at that side of the supply funnel (7), which faces the outlet opening (18) of the conveyor (17).

**Revendications**

1. Dispositif de subdivision de masses pâteuses en portions de poids et/ou volumes prédéterminées, en particulier de chair à saucisse, comprenant

un châssis de machine avec un convoyeur (17) ayant une ouverture d'entrée (19) et une ouverture de sortie (18), dans lequel cette dernière est disposée à un niveau plus élevé par rapport à la première, et dans lequel

le convoyeur (17) est constitué d'un boîtier, qui peut être fermé avec une bride d'obturation (10), et dans lequel un rotor est entraîné en rotation en temps qu'élément de convoyage,

ainsi qu'un entonnoir d'alimentation (7) pivotant ou rabattable, pour la réception d'une masse d'alimentation, avec, à sa base, une sortie (13) en communication avec l'ouverture d'entrée (19) du convoyeur (17) et, à l'intérieur de l'entonnoir, un dispositif de bourrage (20) entraîné, caractérisé en ce que le convoyeur (17) est disposé près de l'entonnoir d'alimentation (7), et dans lequel

la bride d'obturation (10) est fixée à un flanc (11) de l'entonnoir d'alimentation (7),

la sortie (13) de ce dernier traverse la bride d'obturation (10), de sorte que la sortie (13) vient en recouvrement de l'ouverture d'entrée (19) du convoyeur (17), et

l'axe de rotation (22) du rotor s'étend sensiblement perpendiculairement au flanc (11) de l'entonnoir d'alimentation (7) et dans le plan de l'axe central de ce dernier.

2. Dispositif selon la revendication 1, caractérisé en ce que l'ouverture de sortie (18) du convoyeur (17) est dans le plan de rotation du rotor.

3. Dispositif selon les revendications 1 et 2, caractérisé en ce que l'entonnoir d'alimentation (7) est monté pivotant autour d'un axe de pivot (14) s'étendant sensiblement parallèlement à son axe central.

4. Dispositif selon les revendications 1 et 2, caractérisé en ce que l'entonnoir d'alimentation (7) est monté pivotant autour d'un axe de pivot (15) s'étendant sensiblement perpendiculairement à son axe central.

5. Dispositif selon les revendications 3 et 4, caractérisé en ce que l'axe de pivot (14 ou 15) est disposé du côté de l'entonnoir d'alimentation (7) qui est tourné vers l'ouverture de sortie (18) du convoyeur (17).

Fig. 1

Fig. 3

Fig. 2